# FASCICULE DE BREVET EUROPEEN

(11) **EP 0 439 403 B1**
(45) Date de publication et mention de la délivrance du brevet: **08.02.1995**
(21) Numéro de dépôt: 91400146.6
(22) Date de dépôt: 23.01.1991
(51) Int. Cl.: F16K 21/12

(54) **Robinet mélangeur à temporisation**
Selbstschliessender Mischer
Self-closing mixer

(30) Priorité: 23.01.1990 FR 9000746
(43) Date de publication de la demande: 31.07.1991
(73) Titulaire: DELABIE S.A., F-80130 Friville Escarbotin (FR)
(72) Inventeur: Normand, Marcel, F-80820 Arrest (FR); Delabie, Gérard, F-80960 Saint Blimont (FR)
(74) Mandataire: Hammond, William

(56) Documents cités:
- EP-A- 0 091 329
- EP-A- 0 149 373
- EP-A- 0 333 526
- FR-A- 2 120 894
- US-A- 2 710 736

## Description

La présente invention concerne un robinet mélangeur à temporisation, c'est-à-dire un mitigeur qui est alimenté séparément en eau chaude et en eau froide et qui permet de régler la température de l'eau à la sortie, mais aussi dont l'écoulement de l'eau, après l'ouverture du robinet au moyen d'un organe de commande, s'arrête automatiquement après une durée prédéterminée.

Plus précisément, le robinet selon l'invention est du genre comprenant un corps de forme générale cylindrique dans lequel débouchent deux tubulures d'amenée d'eau, respectivement destinées à l'eau froide et à l'eau chaude, et d'où part une tubulure de sortie d'eau mélangée, un organe de réglage susceptible de tourner autour de l'axe du corps du robinet pour changer la température de l'eau à la sortie par modification continue de la la proportion d'eau chaude et d'eau froide, un clapet temporisé entre l'organe de réglage précité et la tubulure de sortie, et un organe de commande pour faire tourner l'organe de réglage on question et pour déplacer le clapet temporisé dans le sens axial à l'encontre d'un ressort, cet organe de réglage étant réalisé sous la forme d'un pot cylindrique dans lequel est mobile axialement un piston de temporisation qui est solidaire du clapet destiné à interrompre l'écoulement de l'eau entre les entrées et la sortie.

Dans un tel robinet, l'organe de commande présente généralement la forme d'un bouton ou d'un levier sur lequel on appuie pour obtenir de l'eau. Après qu'on l'a relâché, l'écoulement s'arrête de lui-même au bout d'un certain temps. On règle la température de l'eau à la sortie en faisant tourner l'organe de commande dans le sens indiqué et de la quantité nécessaire.

De tels robinets sont notamment décrits dans les documents EP-A-091.329, EP-A-149.373 et EP-A-333.526.

Ces robinets connus présentent pour la plupart de nombreux inconvénients, comme le fait que leur conception est peu rationnelle, ce qui oblige à utiliser un grand nombre d'organes mécaniques difficiles à réaliser, et donc coûteux, et conduit finalement à un mitigeur temporisé dont la fabrication est onéreuse et dont la fiabilité n'est pas toujours aussi satisfaisante qu'on le souhaiterait. En outre, de tels robinets sont conçus pour une disposition bien déterminée des tubulures d'amenée de l'eau, ce qui interdit, par exemple, d'utiliser sur certains lavabos, où les tubulures s'étendent verticalement depuis le bas, un robinet qui a été conçu pour une douche avec des arrivées horizontales de part et d'autre du dispositif.

C'est pourquoi un but de la présente invention est de proposer un robinet du genre spécifié ci-avant qui soit plus simple, moins coûteux et plus fiable que ceux actuellement sur le marché.

Un autre but est de réaliser un tel robinet de telle façon qu'il puisse être utilisé presque sans changement des pièces internes, quelle que soit la disposition horizontale ou verticale des amenées d'eau.

Ces buts, ainsi que d'autres qui apparaîtront par la suite, comme ceux de réaliser un mitigeur à temporisation qui interdise les erreurs de montage et qui soit parfaitement étanche, sont atteints grâce à un robinet du genre précisé au début qui est caractérisé par le fait que son clapet, son organe de commande, son piston de temporisation qui est à une extrémité d'une tige creuse dont l'autre extrémité est solidaire en translation et en rotation de l'organe de commande par l'intermédiaire d'un insert axial, et son pot font partie d'une cartouche amovible et interchangeable dont la géométrie est telle que, lorsqu'elle est introduite et fixée dans le corps, son piston de temporisation pénètre dans le pot et son organe de commande est relié au pot de façon à pouvoir le faire tourner, et par le fait que ce pot comprend sur la face extérieure de son fond un obturateur de réglage de température et une couronne circulaire anti-basculement, en regard des sièges, présentant une hauteur égale à celle de l'obturateur, et/ou une fente latérale de réglage de température dont la hauteur est continûment croissante, puis décroissante, et au niveau de laquelle débouchent les tubulures d'entrée latérales.

On comprend que l'utilisation d'un seul type de cartouche interchangeable pour plusieurs types de robinets différents diminue considérablement les coûts de fabrication. En outre, pour réparer un robinet donné, il suffit dans la plupart des cas de changer sa cartouche sans devoir démonter son corps, ce qui représente un simplification importante.

L'organe de commande solidaire de la cartouche interchangeable peut être relié de manière amovible au pot de mélange qui est monté au fond du corps du robinet. De préférence, cette liaison est alors réalisée par l'intermédiaire d'un plateau muni d'au moins un cran venant en prise avec le bord supérieur du pot lorsque la cartouche est montée dans le corps du robinet.

Pour sa part, le clapet qui interrompt et rétablit l'écoulement de l'eau à travers le robinet et qui fait partie de la cartouche amovible est réalisé grâce au fait que le piston de temporisation comporte, sur sa face opposée au pot de mélange, une partie cylindrique axiale munie sur sa surface latérale extérieure d'une gorge annulaire dans laquelle est logé un joint d'étanchéité en saillie vers l'extérieur, et grâce au fait que le plateau cranté précité est muni d'un moyeu dans lequel la partie cylindrique présente à la partie supérieure du piston peut pénétrer jusqu'à être arrêtée par le joint d'étanchéité en question. Il en résulte que le piston de temporisation joue ici également le rôle d'un clapet par sa partie supérieure munie d'un joint d'étanchéité, et que le plateau cranté précité constitue aussi le siège de ce clapet, ce qui simplifie encore plus le dispositif.

Le fait que le robinet selon l'invention comporte une tige creuse montée comme expliqué ci-dessus, permet éventuellement d'isoler thermiquement l'organe de commande du reste du dispositif. En outre, la tige précitée étant solidaire du piston de temporisation, et donc du clapet qui en fait partie, elle transmet à ces organes les poussées axiales exercées par l'utilisateur sur l'organe de commande qui est monté à l'autre extrémité de cette tige.

De préférence, le piston de temporisation du robinet est monté sur cette tige par l'intermédiaire d'une douille axiale de décompression qui est solidaire de l'extrémité de la tige en question, mais qui peut coulisser axialement sur une faible longueur par rapport au piston. Ceci perment de faire précéder le déplacement du clapet qui commande le passage de l'eau d'une courte phase de décompression qui facilite la manoeuvre en diminuant la force à exercer pour vaincre la pression de l'eau à l'ouverture du robinet.

Comme on l'a dit plus haut, l'organe de commande du robinet doit pouvoir faire tourner le pot de mélange par l'intermédiaire du plateau cranté précité qui se trouve au bas de la cartouche amovible selon l'invention et qui vient en prise de manière amovible avec le bord supérieur du pot. Toutefois, pour que ce plateau puisse venir en prise avec le bord du pot, sa position dans le sens radial est imposée. Il en résulte qu'il ne doit pas accompagner le déplacement de l'organe de commande dans le sens axial lorsque l'on appuie sur ce dernier pour ouvrir l'arrivée d'eau.

Avantageusement, ceci est réalisé grâce au fait que l'insert précité qui est solidaire de l'organe de commande est relié au plateau cranté en question par l'intermédiaire d'une pièce cylindrique d'entraînement à laquelle il est relié au moyen d'une liaison par clavette et rainure, qui peut tourner sans coulissement axial dans une enveloppe de la cartouche amovible du robinet et qui, à son extrémité tournée vers le pot de mélange, est rendue solidaire du plateau cranté par l'intermédiaire d'un crabot.

Par ailleurs, un autre rôle de la tige creuse précitée est de permettre l'écoulement de l'eau mélangée à l'intérieur d'elle dans une forme de réalisation du robinet selon l'invention où, lorsque le clapet qui commande le passage de l'eau est ouvert, l'eau s'écoule depuis les tubulures d'amenée jusqu'à une chambre de sortie annulaire reliée à la tubulure de sortie en traversant successivement une partie du pot de mélange, un espace annulaire ménagé entre le moyeu du plateau cranté précité et la tige creuse solidaire de l'organe de commande, des orifices ménagés dans la paroi latérale de cette tige, le volume intérieur de cette dernière sur une faible longueur, d'autres orifices qui sont également ménagés dans la paroi latérale de la tige, mais qui sont parcourus de l'intérieur de cette dernière vers l'extérieur, des orifices pratiqués dans la paroi latérale de la pièce d'entraînement précitée, et enfin des orifices ménagés dans l'enveloppe de la cartouche du robinet.

Cette disposition permet de régler le débit de l'eau à la sortie du robinet lorsque, de manière connue, une vis est montée axialement dans la tige creuse précitée en pouvant être déplacée devant certains des orifices de passage de l'eau qui sont ménagés dans la paroi latérale de la tige et dont il a été question plus haut. Les déplacements de cette vis font qu'elle obture plus ou moins les orifices de passage de l'eau, et qu'elle modifie dons le débit. De préférence, on déplace la vis en la faisant tourner depuis l'extérieur au moyen d'une clef appropriée que l'on introduit à travers la vis creuse de fixation de l'organe de commande sans démonter ce dernier, ce qui permet d'agir sur le débit sans démonter le robinet, et même sans arrêter l'écoulement de l'eau.

De préférence, la pièce d'entraînement spécifiée ci-avant est enfermée dans l'enveloppe de la cartouche amovible du robinet par un chapeau qui est muni d'une bride destinée à le fixer sur le haut du corps du robinet.

Ce chapeau comprend avantageusement des moyens pour limiter de manière réglable la rotation du pot cylindrique de réglage du robinet selon l'invention et/ou des moyens à trous de positionnement et de fixation asymétriques pour interdire le montage de l'ensemble en une position inadéquate, afin, en particulier, que la température de l'eau fournie corresponde bien à la position de l'organe de commande.

Ce chapeau permet donc de maintenir dans le sens axial la pièce cylindrique d'entraînement qui relie la tige creuse du dispositif a son plateau cranté, il sert a fixer la cartouche du robinet sur son corps grâce à sa bride, il porte les butees, éventuellement réglables, qui limitent la rotation de la piece d'entraînement precitée, et donc du pot de mélange, et, enfin, ses trous de vis de fixation asymétriques évitent les erreurs de montage.

Du fait que, selon l'invention, on combine sur un même pot cylindrique une fente latérale et un obturateur de fond, le pot de temporisation devient alors, lui aussi, d'usage universel, quel que soit le type de corps de robinet utilisé, et ce, moyennant une dépense supplémentaire qui est pratiquement négligeable.

La description qui va suivre, et qui ne présente aucun caractère limitatif, permettra de bien comprendre comment la présente invention peut être mise en pratique. Elle doit être lue en regard des dessins annexés, parmi lesquels:
- La figure 1 représente une vue en coupe longitudinale du mitigeur selon l'invention dans sa forme de réalisation qui est plus spécialement destinée à être utilisée pour l'alimentation d'une douche ;
- La figure 2 montre une vue de dessous en perspective du dispositif en forme de pot qui, dans le mitigeur des figures 1 et 3, permet notamment de régler la température de l'eau mélangée et sert de capacité hydraulique pour le système de temporisation ;
- La figure 2A montre une vue en coupe schématique prise selon la ligne A-A de la figure 1 ;
- La figure 2B montre une vue en coupe schématique, prise selon la ligne B-B de la figure 2A, du grain de gauche représenté sur cette figure 2A ;
- La figure 3 est analogue a la figure 1, mais elle représente une forme de réalisation convenant au montage sur un lavabo ;
- La figure 4 montre une vue an coupe schématique prise salon la ligne IV-IV de la figure 3 ;
- La figure 5 montre une vue en coupe longitudinale de la cartouche amovible du robinet mélangeur selon l'invention ; et :
- La figure 6 représente à plus petite échelle une vue en élévation éclatée de l'objet de la figure 5.

Dans ce qui va suivre, on supposera que le robinet selon l'invention est disposé verticalement avec sa clef en haut, tel qu'il est représenté sur les figures, ce qui donne tout leur sans à des expressions comme "supérieur" ou "inférieur" et "horizontal" ou "vertical".

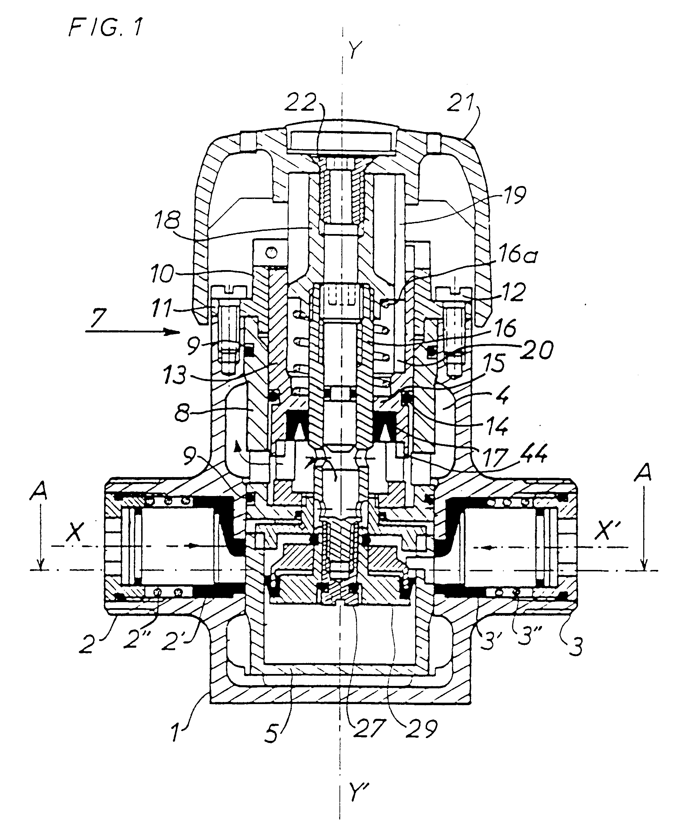

Dans sa forme de réalisation de la figure 1, le robinet mélangeur comprend un corps 1 qui présente, pour l'essentiel, une symétrie de révolution autour de l'axe vertical Y-Y' et à partir duquel font saillie, de part et d'autre, deux embouts coaxiaux 2 et 3 destinés respectivement à être raccordés à une arrivée d'eau chaude et à une arrivée d'eau froide. La sortie de l'eau mélangée se fait par un embout non représenté qui est perpendiculaire au plan de la figure et qui débouche dans une chambre annulaire 4 disposée au-dessus des embouts d'arrivée 2 et 3. Cette chambre 4 s'étend autour d'une cartouche amovible qui constitue le robinet proprement dit et qui sera décrite plus loin.

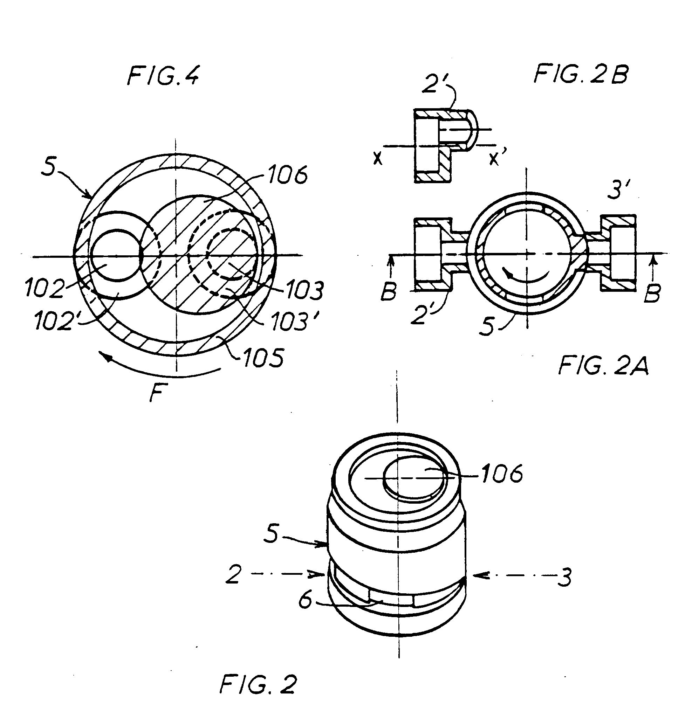

Dans le fond du corps 1 est monté avec un faible jeu un organe de mélange et de temporisation 5 en forme de pot généralement cylindrique. De manière connue, et comme on le voit sur la vue en perspective de la figure 2, la paroi latérale de ce pot 5 présente, au niveau des embouts 2 et 3, une fente 6 dont la hauteur passe de zéro à sa valeur maximale sur 170° environ, puis de cette valeur maximale à zéro sur les 170° diamétralement opposés.

Il en résulte que, si l'on fait tourner d'un demi-tour le pot 5 autour de l'axe vertical Y-Y', dans un certain sens, le défilement de la fente 6 devant l'embout 2 fait varier de zéro à sa valeur maximale la section de passage, et donc le débit, de l'eau chaude vers la chambre de sortie 4. En même temps, la partie symétrique de la fente 6 qui défile devant l'embout 3 fait varier de sa valeur maximale à zéro la section de passage, et donc le débit, de l'eau froide vers la chambre de sortie 4. En conséquence, la température de l'eau mélangée qui arrive dans cette dernière passe continûment du froid nu chaud lors de cette rotation de 170° du pot 5. Une rotation en sens inverse de ce dernier diminue la temperature de l'eau.

En outre, l'extrémité intérieure de grains 2' et 3' montés respectivement dans les embouts 2 et 3 est appuyée par des ressorts 2'' et 3'', respectivement, sur la paroi latérale extérieure du pot 5. Le rôle de ces grains 2' et 3' est double : d'une part, ils assurent l'étanchéité à ce niveau, et, d'autre part, du fait que leur section transversale diminue sensiblement de moitié de l'extérieur vers l'intérieur, ils diminuent d'autant la section de passage de l'eau vers l'intérieur du pot 5, Ce qui permet à la pression des amenées d'eau chaude et froide de plaquer l'extrémité intérieure des grains 2' et 3' sur la paroi extérieure du pot 5, et évite le passage de l'eau chaude en position "eau froide", sans que les ressorts 2" et 3" aient besoin d'être puissants.

D'autre part, comme on le voit sur les figures 2A et 2B, la partie rétrécie des grains 2' et 3', laquelle présente une face avant incurvée de façon connue afin d'épouser parfaitement la face externe du pot, est excentrée par rapport à l'axe principal X-X' de ces grains, de manière à les positionner parfaitement et à éviter tout pivotement sur eux-mêmes qui serait préjudiciable au bon fonctionnement de l'ensemble de mélange.

On notera d'ailleurs que, pour faciliter la mise on place du pot 5 dans le fond du corps 1 du robinet au niveau des grains 2' et 3', sa surface extérieure peut être rétrécie sur sa partie inférieure.

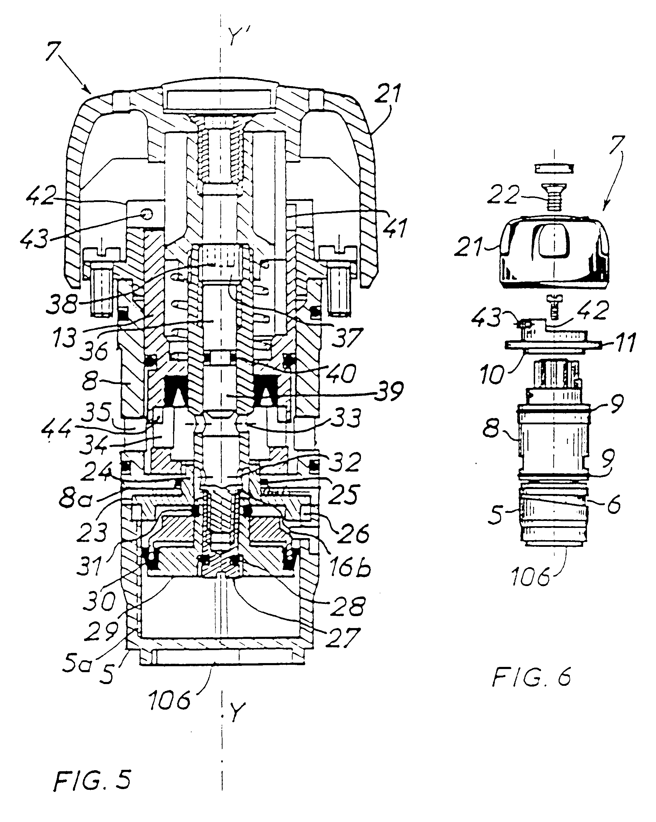

La rotation du pot 5, et donc le réglage de la température de l'eau à la sortie, est réalisée grâce à une cartouche amovible qui est désignée dans son ensemble par le repère 7, qui est représentée sur les figures 5 et 6 alors qu'elle est extraite du corps 1 du robinet et qui, en même temps, sert aussi à commander le passage de l'eau vers la chambre de sortie 4 et la temporisation de cet écoulement.

Comme on le voit sur les figures 1, 5 et 6, la cartouche 7 comprend une enveloppe de cartouche 8 qui est insérée dans le corps 1 du robinet avec interposition de joints toriques d'étanchéité 9. A sa partie supérieure, l'enveloppe 8 est maintenue prisonnière dans un chapeau 10 muni d'une bride 11 qui e'étend vers l'extérieur et qui est montée sur le bord supérieur du corps 1 au moyen de vis 12, lesquelles sont montées de façon non symétriques de manière à indexer l'ensemble.

A l'intérieur de l'enveloppe 8 est montée avec un faible jeu, et de manière coaxiale, une pièce cylindrique de liaison ou d'entraînement 13. Un joint torique 14 est interposé entre l'enveloppe 8 et la pièce d'entrainement 13, mais il n'empêche pas la rotation de celles-ci l'une par rapport à l'autre autour de l'axe vertical Y-Y'. En revanche, la pièce d'entraînement 13 ne peut pas se déplacer verticalement, car elle est emprisonnée entre le chapeau 10 de l'enveloppe 8 et le fond de cette dernière.

Non loin de son milieu dans le sens vertical, l'intérieur de la pièce d'entraînement 13 comporte une paroi 15 qui est disposée transversalement, c'est-à-dire perpendiculairement a l'axe Y-Y', et qui est traversée par une tige verticale creuse 16. Une bague d'étanchéité 17 est montée entre cette dernière et la surface intérieure de la pièce cylindrique d'entraînement 13, juste au-dessous de la paroi horizontale 15. La tige 16 peut donc coulisser verticalement et tourner, de manière étanche, par rapport à la pièce d'entraînement 13.

Au-dessus de la paroi 15, la tige 16 est vissée axialement dans le fond élargi d'un insert 18 qui peut coulisser dans la pièce d'entraînement 13. Un ressort de compression 16a est enroulé autour de la tige 16 entre la paroi transversale 15 de la pièce d'entraînement 13 et le fond élargi de l'insert 18. En outre, ce dernier comporte sur sa périphérie une clavette verticale 19 qui peut se déplacer dans une rainure 20 ménagée selon une génératrice de la pièce d'entraînement cylindrique 13, ce qui empêche les rotations de celle-ci par rapport à l'insert 18, et donc par rapport à la tige 16 qui en est solidaire.

Un volant 21 en forme de chapeau est vissé sur l'insert 18 au moyen d'une vis axiale creuse 22 ; il recouvre toute la partie haute du dispositif, c'est-à-dire, pour l'essentiel, l'insert 18 et le chapeau 10 de l'enveloppe 8, en s'arrêtant vers le bas légèrement au-dessous du plan de contact de la bride 11 du chapeau 10 avec le haut du corps 1 du robinet. Si le volant 22 est en métal, il est avantageux que l'insert 18 soit en matière plastique pour servir d'isolation thermique.

On notera dès à présent qu'une poussée vers le bas exercée sur le volant 21 se transmet solidairement à la tige 16, la pièce d'entraînement 13 restant immobile dans ce cas. En revanche, si l'on fait tourner ce volant 21 autour de l'axe Y-Y', cette rotation se transmet à la tige 16, mais aussi à la pièce d'entraînement 13 par l'intermédiaire de la clavette 19 et de la rainure 20. Une poussée et une rotation conjuguées exercées sur le volant 21 font tourner la pièce d'entraînement 13 et la tige 16, mais seule cette dernière coulisse vers le bas, puisque la pièce 13 est bloquée dans le sens vertical, ainsi que cela a été dit plus haut.

Pour des raisons de clareté, les repères mentionnés dans la partie suivante de la description ont été portés sur la figure 5 qui représente la cartouche 7 seule.

Au-dessous du fond 8a de l'enveloppe 8 de la cartouche 7 s'étend horizontalement, c'est-à-dire perpendiculairement a l'axe Y-Y', un plateau 23 relie à la base de la pièce d'entraînement 13 par un moyeu 24 qui traverse le fond 8a de l'enveloppe 8 avec interposition d'un joint torique d'étanchéité 25. Ce plateau 23 comporte sur sa périphérie des crans 26 qui, lorsque la cartouche 7 est montée dans le corps 1 du robinet, viennent en prise avec des encoches de forme correspondante ménagées dans le bord supérieur du pot 5 de réglage de la température de l'eau.

Il en résulte que la rotation du volant 21 autour de l'axe vertical entraîne celle du pot 5, et donc la modification de la température de l'eau à la sortie, par l'intermédiaire de la pièce d'entraînement 13 et du plateau 23.

En ce qui concerne maintenant la commande temporisée du passage de l'eau vers la chambre de sortie 4, la tige 16 traverse le moyeu 24 vers le bas, et son extrémité inférieure est vissée dans une douille coaxiale de décompression 27. Cette dernière est entourée, avec interposition d'un joint torique d'étanchéité 28, par un piston 29 muni sur sa périphérie d'une lèvre annulaire d'étanchéité 30 qui s'applique sur la surface latérale intérieure du pot 5.

Plus précisément, la liaison entre la douille de décompression 27 et le piston 29 n'autorise qu'un faible déplacement axial de ces deux organes l'un par rapport à l'autre, du fait qu'un épaulement annulaire 16b ménagé sur la tige 16, au-dessus de la douille 27, limite vers le haut le coulissement du piston 29 sur celle-ci, cependant que ce coulissement est limité vers le bas par le joint 28 qui est logé dans une gorge annulaire extérieure de la douille 27, et qui est donc bloqué dans le sens vertical.

D'autre part, dans la position fermée du robinet qui est représentée sur les figures 1 et 5, la partie supérieure de la tige du piston 29 pénètre légèrement, et avec un trés faible jeu, dans le moyeu 24 du plateau cranté 23. Au-dessous de celui-ci, cette tige comport une gorge annulaire dans laquelle est logé un joint torique d'étanchéité 31 qui fait saillie vers l'extérieur. Il en résulte que le bord inférieur du perçage central ménage dans le moyeu 24 coopère avec la tige du piston 29, et surtout avec son joint torique 31, pour constituer un clapet entre le pot 5 et la chambre de sortie 4.

Au-dessus de ce clapet, lorsqu'il est ouvert, et selon les flèches de la figure 1, l'eau pénètre dans le perçage central du moyeu 24, passe à l'intérieur de la tige creuse 16 par des orifices 32 ménagés dans sa paroi, monte dans la tige 16, en ressort par des orifices 33 situés au-dessus du fond d'un crabot 44 qui coopère en rotation avec, d'une part, la pièce d'entraînement 13, et, d'autre part, le plateau 23, et traverse enfin des orifices 34 et 35 ménagés respectivement dans la paroi de la pièce 23 et de l'enveloppe 8 de la cartouche 7 pour arriver dans la chambre de sortie 4.

On comprend dès lors que, lorsque l'on pousse le volant 21 vers le bas à l'encontre du ressort 16a, ce mouvement transmis par la tige 16 déplace tout d'abord légèrement vers le bas la douille de décompression 27 qui coulisse dans le piston 29. Ce dernier est ensuite entraîné à son tour par l'épaulement 16b qui est ménagé sur la tige 16 au-dessus de la douille 27 et qui s'appuie sur le bord supérieur de la tige du piston 29. Le mouvement s'arrête lorsque le volant 21 arrive en butée sur le haut du chapeau 10.

Lorsque l'on relâche le volant 21, le piston 29 remonte sous l'effet du ressort 16a, mais son mouvement est ralenti parce qu'il n'est autorisé à remonter que si de l'eau pénètre dans le fond du pot 5 et que, du fait de la présence de la lèvre d'étanchéité 30 autour du piston, cette eau ne peut passer que par une petite rainure 5a qui est représentée sur la figure 5 et qui est ménagée dans la paroi latérale intérieure du pot 5, selon une génératrice de ce dernier. Ce mouvement ascendant du piston s'arrête lorsque le joint 31 s'applique sur le moyeu du plateau 23, ce qui ferme l'arrivée d'eau à la chambre de sortie 4.

Il est en outre possible de régler le débit de l'eau à la sortie du robinet, de manière connue, au moyen d'une vis spéciale 36 dont la tête 37 est filetée extérieurement pour être vissée axialement depuis le haut dans un filetage intérieur correspondant de la tige creuse 16. Cette tête 37 comprend un six-pans creux 38, ceci permettant de la faire tourner au moyen d'une clef appropriée que l'on introduit depuis l'extérieur à travers la vis 22, sans démonter le volant 21. La tête 37 de la vis 36 se prolonge vers le bas par un doigt 39 qui s'étend verticalement avec un faible jeu dans la tige creuse 16, avec interposition d'un joint torique d'étanchéité 40.

Lorque la tête 37 de la vis 36 affleure à l'extrémité supérieure de la tige creuse 16, l'extrémité inférieure de son doigt 39 est à peu près au niveau du bord supérieur des orifices 33, de sorte que le passage de l'eau à travers ceux-ci vers la chambre de sortie 4 n'est pas perturbé. Si l'on visse au contraire cette tête 37 dans le filetage de la tige creuse 16, l'extrémité inférieure du doigt 39 vient obturer plus ou moins les orifices 33 en réduisant d'autant le débit.

On notera encore que la rainure 20 de la pièce d'entraînement 13 se termine vers le haut par une languette 41 qui coopère avec deux butées 42 ménagées sur le chapeau 10 de l'enveloppe 8 de la cartouche 7 pour limiter à 180° au maximum la rotation de la pièce d'entraînement 13, et donc du pot 5 qui sert au réglage de la temperature de l'eau sortant du robinet. Une vis 43 vissée dans l'une des butées 42 permet de réduire l'amplitude de la rotation de la pièce 13.

Enfin, des tenons asymétriques non représentés sont présents sur le pot 5, sur le plateau cranté 23 et sur la pièce d'entraînement 13 pour que l'ensemble soit nécessairement monté dans la bonne position.

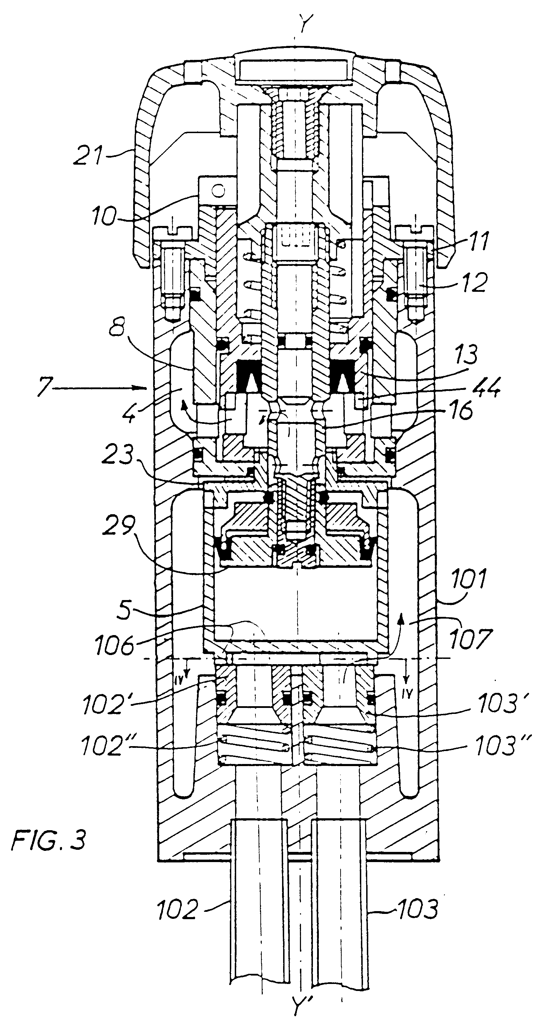

La forme de réalisation représentée sur la figure 3 est plus spécialement destinée à être montée sur un lavabo et, pour cette raison, les tubulures d'arrivée d'eau chaude et froide respectives 102 et 103 traversent verticalement le fond du corps 101 du robinet parallèlement à l'axe Y-Y'.

On retrouve ici un organe de mélange et de temporisation 5 en forme de pot, les grains 102' et 103' des tubulures 102 et 103 étant ici poussés par des ressorts respectifs 102'' et 103'', non pas sur la paroi latérale du pot 5, mais sur un obturateur plan et circulaire 106 qui est ménagé d'une coule pièce dans le fond du pot 5 et que l'on voit bien sur les figures 2 et 4.

Dans l'une des positions extrêmes du pot 5, représentée sur cette figure, l'obturateur 106 recouvre complètement la tubulure d'eau froide 103, ainsi qu'un bord du grain 102' de la tubulure d'eau chaude 102, cette dernière restant toutefois entièrement libre. Cette dispostion assure un appui aux deux grains 102' et 103', même lorsqu'une des deux tubulures n'est pas recouverte par l'obturateur 106. Une couronne circulaire 105 de hauteur strictement égale à la hauteur de l'obturateur 106 évite le basculement des grains 102' et 103'.

Si l'on fait tourner de 180° l'obturateur 106 autour de l'axe Y-Y' dans le sens de la flèche F, c'est au contraire la tubulure d'eau froide 103 qui est dégagée et celle d'eau chaude 102 qui est occultée, de sorte que c'est uniquement de l'eau froide qui s'écoule. Bien entendu, toutes les proportions intermédiaires d'eau chaude et d'eau froide, et donc toutes les températures de l'eau à la sortie, sont obtenues de manière continue au moyen des positions intermédiaires de l'obturateur 106.

Ainsi que cela est indiqué par une flèche sur la figure 3, l'eau froide provenant de la tubulure 103 peut s'échapper latéralement de chaque côte du siège 103 par le fond du pot 5 et, en contournant la couronne 105, parvenir dans un volume annulaire 107 qui entoure le pot 5, après quoi elle s'écoule dans ce dernier par la fente latérale 6. Il en va d'une manière analogue, bien entendu, pour l'eau chaude de la tubulure 102 lorsque cette dernière est dégagée par l'obturateur 106.

La géométrie du corps 101 est telle que, si l'on y introduit une cartouche rigoureusement identique à celle, 7, de la figure 1, et si on fixe cette cartouche par sa bride 11, au moyen des vis asymétriques 12, sur le bord supérieur du corps 101, l'obturateur 106 au fond du pot 5 se trouve nécessairement dans sa position correcte pour assurer sa fonction vis-à-vis des grains 102' et 103'.

On notera que, dans le cas représenté sur la figure 2 où le pot de mélange et de temporisation 5 comprend à la fois la fente de réglage 5 et l'obturateur 106, c'est la première qui assure seule le réglage de la température de l'eau à la sortie lorsque la cartouche 7 des figures 5 et 6 est montée dans un robinet à arrivées d'eau latérales du genre de celui de la figure 1. Au contraire, c'est l'obturateur 106 qui règle seul la température dans le cas d'un robinet à arrivées d'eau verticales analogue à celui de la figure 3. En fait, il serait bien entendu possible de prévoir un pot 5 qui serait muni de la fente 6 seule ou de l'obturateur 106 seul, mais la reunion de ces deux organes dans un seul et même pot 5 conduit à une universalité de la cartouche 7 qui compense largement l'augmentation du coût.

## Revendications

1. Robinet mélangeur à temporisation, du genre comprenant un corps de fome générale cylindrique (1 ; 101) dans lequel débouchent deux tubulures d'amenée d'eau (2, 3 ; 102, 103), respectivement destinées à l'eau froide et à l'eau chaude, et d'où part une tubulure de sortie d'eau mélangée un organe de réglage (5) susceptible de tourner autour de l'axe dudit corps (1 ; 101) pour changer la température de l'eau sortant du robinet par modification continue de la proportion d'eau chaude et d'eau froide, un clapet (24 ; 31) temporisé entre ledit organe de réglage (5) et ladite tubulure de sortie, et un organe de commande (21) pour faire tourner ledit organe de réglage (5) et déplacer ledit clapet temporisé (24 ; 31) dans le sens axial à l'encontre d'un ressort (16a), ledit organe de réglage étant réalisé sous la forme d'un pot cylindrique (5) dans lequel est mobile axialement un piston de temporisation (29) solidaire dudit clapet, caractérisé par le fait que ledit clapet (24 ; 31), ledit organe de commande (21), ledit piston de temporisation (29) qui est à une extrémité d'une tige creuse (16) dont l'autre extrémité est solidaire en translation et en rotation dudit organe de commande (21) par l'intermédiaire d'un insert axial (18), et ledit pot (5) font partie d'une cartouche amovible et interchangeable (7) dont la géométrie est telle que, lorsqu'elle est introduite et fixée dans ledit corps (1 ; 101), son piston de temporisation (29) pénètre dans ledit pot (5) et son organe de commande (21) est relié audit pot (5) de façon à pouvoir le faire tourner, et par le fait que ledit pot (5) comprend sur la face extérieure de son fond un obturateur (106) de réglage de température et une couronne circulaire (105) anti-basculement, en regard des sièges (102' ; 103') présentant une hauteur égale à celle dudit obturateur, et/ou sur sa paroi latérale, une fente latérale de réglage de température (6) dont la hauteur est continûment croissante, puis décroissante et au niveau de laquelle débouchent lesdites tubulures d'entrée latérales (2 ; 3).

2. Robinet selon la revendication 1, caractérisé par le fait que ledit organe de commande (21) est relié audit pot (5) par l'intermédiaire d'un plateau (23) muni d'au moins un cran venant en prise avec le bord supérieur dudit pot (5) lorsque ladite cartouche (7) est montée dans ledit corps (1).

3. Robinet selon la revendication 2, caractérisé par le fait que, pour former ledit clapet, ledit piston (29) comporte, sur sa face opposée audit pot (5), une partie cylindrique axiale munie sur sa surface latérale extérieure d'une gorge annulaire dans laquelle est logé un joint d'étanchéité (31) en saillie vers l'extérieur, et ledit plateau (23) est muni d'un moyeu dans lequel ladite partie cylindrique peut pénétrer jusqu'a être arrêtée par ledit joint d'étanchéité (31).

4. Robinet selon l'une quelconque des revendications 1 a 3, caractérisé par le fait que ledit piston de temporisation (29) est maintenu sur ladite tige (16) par l'intermédiaire d'une douille axiale de décompression (27) qui est solidaire de l'extrémité de la tige (16), mais qui peut coulisser axialement sur une faible longueur par rapport au piston (29).

5. Robinet selon l'une quelconque des revendications 1 et 4, caractérisé par le fait que ledit organe de commande (21) est relié audit plateau (23) de façon à pouvoir le faire tourner autour de son axe (Y-Y'), mais sans l'entraîner axialement.

6. Robinet selon la revendication 5, caractérisé par le fait que ledit organe de commande (21) est relié audit plateau (23) par l'intermédiaire dudit insert axial (18) qui est relié au moyen d'une liaison par clavette et rainure (19, 20) à une pièce cylindrique d'entraînement (13), qui peut tourner sans coulissement axial dans une enveloppe (8) de ladite cartouche (7) et qui, à son extrémité tournée vers ledit pot (5) est munie d'un crabot (44) solidaire en rotation dudit plateau cranté (23).

7. Robinet selon la revendication 6, caractérisé par le fait que, lorsque ledit clapet (31) est ouvert, l'eau s'écoule depuis les tubulures d'amenée (2, 3) jusqu'a une chambre de sortie annulaire (4) reliée à la tubulure de sortie en traversant successivement une partie dudit pot (5), un espace annulaire ménagé entre le moyeu (24) dudit plateau cranté (23) et ladite tige creuse (16), des orifices (32) ménagés dans la paroi latérale de cette tige (16), le volume intérieur de cette dernière sur une faible longueur, d'autres orifices (33) qui sont également ménagés dans la paroi latérale de la tige (16), mais qui sont parcourus de l'intérieur de cette dernière vers l'extérieur, des orifices (34) pratiqués dans la paroi latérale de ladite pièce d'entraînement (13) et enfin des orifices (35) ménagés dans l'enveloppe (8) de ladite cartouche (7).

8. Robinet selon l'une quelconque des revendications 6 et 7, caractérisé par le fait que ladite pièce d'entraînement (13) est enfermée dans l'enveloppe (8) de ladite cartouche (7) par un chapeau (10) qui est muni d'une bride destinée à le fixer sur le haut du corps (1 ; 101) du robinet.

9. Robinet selon l'une quelconque des revendications 1 a 8, caractérisé par le fait que le chapeau (10) comprend deux butées (42) pour limiter la rotation du pot cylindrique (5) et une vis (43) pour réduire l'amplitude de cette rotation, et/ou des moyens à trous de positionnement et de fixation asymétriques pour interdire le montage de ladite cartouche (7) en position inadéquate.

10. Robinet selon l'une quelconque des revendications 7 à 9, caractérisé par le fait qu'il comporte des moyens pour faire varier le débit de l'eau à la sortie, lesquels comprennent une vis qui est montée axialement dans ladite tige et qui peut être déplacée devant des orifices de passage de l'eau (33) ménagés dans la paroi latérale de ladite tige (16).

## Claims

1. A self-closing mixer tap, of the type comprising a body of general cylindrical shape (1; 101) into which two water supply pipes (2,3;102, 103) open, respectively intended for cold water and for hot water, and from which there leaves a pipe for the outlet of mixed water, a regulating element (5) capable of turning about the axis of the said body (1 ;101) to change the temperature of the water leaving the tap by continuous modification of the proportion of hot water and of cold water,a self-closing valve (24;31) between the said regulating element (5) and the said outlet pipe, and a control element (21) to turn the said regulating element (5) and move the said self-closing valve (24; 31) in axial direction against a spring (16a), the said regulating element being produced in the form of a cylindrical chamber (5) in which a piston for self-closure (29) is axially movable, which is fixed relative to the said valve, characterised in that the said valve (24; 31), the said control element (21), the said piston for self-closure (29) which is at one end of a hollow stem (16), the other end of which is fixed in translation and in rotation relative to the said control element (21) by means of an axial insert (18), and the said chamber (5) form part of a removable and interchangeable cartridge (7), the geometry of which is such that, when it is introduced and fixed in the said body (1; 101), its piston for self-closure (29) extends into the said chamber (5) and its control element (21) is connected to the said chamber (5) so as to be able to turn it, and in that the said chamber (5) comprises on the exterior face of its base a shutter (106) for regulating temperature and a circular anti-rocking crown (105), facing the seats (102'; 103') having a height equal to that of the said shutter, and/or on its lateral wall a lateral slit (6) for regulating temperature, the height of which is continuously increasing, then decreasing, and at the level of which the said lateral inlet pipes (2; 3) open out.

2. A tap according to Claim 1, characterised in that the said control element (21) is connected to the said chamber (5) by means of a plate (23) provided with at least one notch coming into engagement with the upper edge of the said chamber (5) when the said cartridge (7) is mounted in the said body (1).

3. A tap according to Claim 2, characterised in that to form the said valve, the said piston (29) comprises, on its face opposite the said chamber (5), an axial cylindrical part provided on its lateral exterior surface with an annular groove, in which there is housed a tightness joint (31) projecting towards the exterior, and the said plate (23) is provided with a hub in which the said cylindrical part can extend until it is stopped by the said tightness joint (31).

4. A tap according to any one of Claims 1 to 3, characterised in that the said piston for self-closure (29) is held on the said stem (16) by means of an axial decompression socket (27) which is integral with the end of the stem (16), but which can slide axially over a small length in relation to the piston (29).

5. A tap according to any one of Claims 1 and 4, characterised in that the said control element (21) is connected to the said plate (23) so as to be able to turn it about its axis (Y-Y'), but without moving it axially.

6. A tap according to Claim 5, characterised in that the said control element (21) is connected to the said plate (23) by means of the said axial insert (18) which is connected to the hub by a connection by pin and groove (19, 20) to a cylindrical movement piece (13), which can turn without axial sliding in a casing (8) of the said cartridge (7) and which, at its end turned towards the said chamber (5), is provided with a dog (44) fixed as regards rotation to the said notched plate (23).

7. A tap according to Claim 6, characterised in that, when the said valve (31) is open, the water flows from the inlet pipes (2,3) to an annular outlet chamber (4) connected to the outlet pipe, passing successively through a part of the said chamber (5), an annular space provided between the hub (24) of the said notched plate (23) and the said hollow stem (16), orifices (32) provided in the lateral wall of this stem (16), the interior volume of the latter over a short length, other orifices (33) which are likewise provided in the latter wall of the stem (16), but which are travelled along from the interior of the latter towards the exterior, orifices (34) arranged in the lateral wall of the said movement piece (13) and finally orifices (35) provided in the casing (8) of the said cartridge (7).

8. A tap according to any one of Claims 6 and 7, characterised in that the said movement piece (13) is enclosed in the casing (8) of the said cartridge (7) by a cap (10) which is provided with a collar intended to fix it on the top of the body (1 ; 101) of the tap.

9. A tap according to any one of Claims 1 to 8, characterised in that the cap (10) comprises two stops (42) to limit the rotation of the cylindrical chamber (5) and a screw (43) to reduce the amplitude of this rotation, and/or means with asymmetrical positioning and fixing holes to prevent the mounting of the said cartridge (7) in an inadequate position.

10. A tap according to any one of Claims 7 to 9, characterised in that it comprises means to vary the flow of the water at the outlet, which comprise a screw which is mounted axially in the said stem and which can be moved in front of the orifices for passage of water (33) provided in the lateral wall of the said stem (16).

## Patentansprüche

1. Selbstschließender Mischer bestehend aus einem im wesentlichen zylindrischen Gehäuse (1; 101), in welches zwei Wasserzuleitungsrohre (2, 3; 102, 103) einmünden, die jeweils für kaltes Wasser und für heißes Wasser bestimmt sind, und von welchem ein Abfluß für Mischwasser abgeht, einer Regelvorrichtung (5), die um die Achse des Mischergehäuses (1; 101) drehbar ist, um die Temperatur des aus dem Mischhahn austretenden Wassers durch fortlaufende Änderung des Verhältnisses von heißem zu kaltem Wasser zu ändern, einem selbstschließenden Klappenventil (24; 31), das zwischen der oben genannten Regelvorrichtung (5) und dem Austrittsrohr angeordnet ist, und einer Steuereinheit (21) zur Drehung der Regelvorrichtung (5) und zur Verschiebung des selbstschließenden Klappenventils (24; 31) in axialer Richtung entgegen einer Feder (16a), wobei die Regelvorrichtung in Form eines zylindrischen Topfes (5) ausgeführt ist, in welchem ein axial beweglicher selbstschließender Kolben (29) vorgesehen ist, der mit dem Klappenventil in Verbindung steht, **dadurch gekennzeichnet**,daß das Klappenventil (24; 31), die Steuereinheit (21), der selbstschließende Kolben (29), der am Ende eines Hohlschaftes (16) angeordnet ist, dessen anderes Ende bei Translation und bei Rotation der Steuereinheit (21) an einem zwischen diesen angeordneten axialen Zwischenteil (18) anliegt, und der Topf (5) zu einem herausnehmbaren und austauschbaren Einsatz (7) gehören, dessen Geometrie dergestalt ist, daß, wenn er in besagtes Gehäuse (1; 101) eingeführt und befestigt ist, der selbstschließende Kolben (29) in den Topf (5) dringt und die Steuereinheit (21) mit dem Topf (5) drehbar verbunden ist, und daß der Topf (5) auf der Außenseite seines Bodens einen Verschluß (106) zur Temperaturregulierung und eine ein Verkippenverhindernde kreisförmige Einfassung (105) aufweist, die im Vergleich zu den Kupplungstücken (102'; 103') eine Höhe gleich derjenigen des Verschlusses aufweist und/oder auf dessen seitlicher Wand sich ein lateraler Spalt zur Temperaturregulierung (6) befindet, dessen Höhe kontinuierlich wächst, dann abnimmt, wobei auf Höhe dessen seitliche Zuleitungsrohre (2; 3) einmünden.

2. Mischer nach Anspruch 1, **dadurch gekennzeichnet,** daß das Steuergerät (21) mit dem Topf (5) unter Zwischenlage einer Scheibe (23) verbunden ist, die mit wenigstens einem Einschnitt versehen ist, der mit dem oberen Rand des Topfes (5) in Eingriff kommt, wenn der Einsatz (7) in dem Gehäuse (1) befestigt ist.

3. Mischer nach Anspruch 2, **dadurch gekennzeichnet,** daß zur Bildung des Klappenventils der Kolben (29) auf seiner dem Topf (5) gegenüberliegenden Seite einen zylindrischen axialen Bereich aufweist, der auf seiner seitlichen äußeren Oberfläche mit einer Ringnut versehen ist, in welcher ein nach außen vorspringender Dichtungsring (31) angeordnet ist, und daß die Scheibe (23) eine Nabe aufweist, in welche das zylindrische Bauteil so weit eindringen kann, bis es an dem Dichtungsring (31) anliegt.

4. Mischer nach einem der Ansprüche 1 bis 3, **dadurch gekennzeichnet**, daß der selbstschließende Kolben (29) auf dem Schaft (16) durch Zwischenlage einer axialen Dekompressionshülse (27) gehalten wird, die am Ende des Schaftes (16) befestigt ist, aber die axial auf einer geringen Länge in Bezug auf den Kolben (29) gleitbar ist.

5. Mischer, nach einem der Ansprüche 1 oder 4, **dadurch gekennzeichnet,** daß die Steuereinheit (21) mit der Scheibe (23) so verbunden ist, daß diese um ihre Achse (Y-Y') drehbar ist, jedoch ohne in axialer Richtung bewegt zu werden.

6. Mischer, nach Anspruch 5, **dadurch gekennzeichnet,** daß die Steuereinheit (21) mit der Scheibe (23) durch Zwischenlage des axialen Zwischenteiles (18) verbunden ist, das mittels einer Verbindung aus Splint und Nut (19, 20) an einem zylindrischen Mitnehmer (13) angeordnet ist, der ohne axiales Gleiten in der Ummantelung (8) des Einsatzes (7) drehbar ist und der an seinem dem Topf (5) zugewandten Ende mit einer Klaue (44) versehen ist, die während der Drehung mit der eingeschnittenen Scheibe (23) verbunden ist.

7. Mischer nach Anspruch 6, **dadurch gekennzeichnet,** daß, wenn das Klappenventil (31) geöffnet ist, das Wasser aus den Zuführungsrohren (2, 3) hin zu einer ringförmigen Austrittskammer (4), die am Ausfluß angeordnet ist, fließt, indem es nacheinander einen Teil des Topfes (5), einen ringförmigen Zwischenraum, der zwischen der Nabe (24) der tief eingeschnittenen Scheibe (23) und dem Hohlschaft (16) angeordnet ist, die Öffnungen (32), die in der seitlichen Wand des Hohlschaftes (16) angeordnet sind, den Innenraum des letzteren auf einer geringen Strecke, weitere Öffnungen (33), die gleichermaßen in der seitlichen Wandung des Hohlschaftes (16) angeordnet sind, aber die vom Inneren des letzteren in Richtung nach außen durchlaufen werden, die Öffnungen (34), die in der seitlichen Wandung des Mitnehmers (13) angeordnet sind, und schließlich die Öffnungen (35), die in der Ummantelung (8) des Einsatzes (7) angeordnet sind, durchfließt.

8. Mischer nach einem der Ansprüche 6 oder 7, **dadurch gekennzeichnet,** daß der Mitnehmer (13) in die Ummantelung (8) des Einsatzes (7) durch eine Kapsel (10) eingeschlossen ist, die mit einem Flansch versehen ist, um diese auf dem Oberteil des Gehäuses (1, 101) des Mischers zu befestigen.

9. Mischer nach einem der Ansprüche 1 bis 8, **dadurch gekennzeichnet,** daß die Kapsel (10) zwei Anschläge (42) aufweist, um die Rotation des zylindrischen Topfes (5) zu begrenzen, und eine Schraube (43), um die Rotationsamplitude herabzusetzen, und/oder Mittel zur Positionierung und zur asymmetrischen Fixierung, um die Montage des Einsatzes (7) in ungeeigneter Stellung zu verhindern.

10. Mischer nach einem der Ansprüche 7 bis 9, **dadurch gekennzeichnet,** daß Mittel vorgesehen sind, um die Durchflußmenge des Wassers am Ausfluß variieren zu können, wobei diese eine Schraube aufweisen, die axial an dem Schaft befestigt ist und die vor den Öffnungen (33) für den Wasserdurchfluß, die an der seitlichen Wand des Schaftes (16) angebracht sind, verschoben werden kann.
